# EUROPEAN PATENT APPLICATION

(11) **EP 2 048 203 A1**
(43) Date of publication of application: **15.04.2009**
(21) Application number: 07020062.1
(22) Date of filing: 12.10.2007
(51) Int. Cl.: C09C 1/62, C09C 1/64, B05D 7/16, C09D 5/08

(54) **Corrosion inhibiting coating for active corrosion protection of metal surfaces comprising a sandwich-like inhibitor complex**

(71) Applicant: Max-Planck-Gesellschaft zur Förderung der Wissenschaften e.V., 80539 München (DE)
(72) Inventor: Andreeva, Daria, 10119 Berlin (DE); Shchukin, Dmitry, 13349 Berlin (DE); Möhwald, Helmuth, 55411 Bingen (DE)
(74) Representative: Katzameyer, Michael

(57) **Abstract**

The present invention relates to a corrosion inhibing coating for active corrosion protection of metal surfaces comprising a sandwich-like inhibitor complex and to methods for preparing the same.

The sandwich-like complex of the corrosion inhibiting coating comprises a first inner layer of organic species, a corrosion inhibitor layer and a second outer layer of organic species. Said sandwich-like complex is sensitive to at least one stimulus, e.g. a pH change, and capable to release the corrosion inhibitor in response to said stimulus.

## Description

### Background

The corrosion degradation is one of the main factors which determine the service life of metallic structures. During the last decade new results have been obtained on the electrochemical behaviour of aluminium in different aqueous solutions. The surface degradation of aluminium occurs when corrosive agents (e.g. chlorides) reach the metal-film interface. It has been shown that chloride does not penetrate into the oxide layer but that it is chemisorbed onto the oxide surface and acts as a reaction partner, aiding dissolution via the formation of oxide-chloride complexes (L. Tomcsanyi, K. Varga, I. Bartik, G. Horanyi, E. Maleczki, Electrochemica Acta 1989, 34, 855). Therefore, the corrosion process can be slowed down by competitive adsorption of inhibitors which prevent the adsorption of aggressive anions, by the formation of a more resistant metal oxide layer or by formation of protective coating on the metal surface.

A complete coating system usually consists of three individual layers. The first layer is the conversion coating, which is a surface pre-treatment step. This layer protects the underlying metal from corrosion and also gives improved adhesion to the substrate. The second layer is the primer, which is made up of pigmented organic resins, such as epoxies. The final layer is the topcoat which is typically formulated using polyurethane resins.

Organic and inorganic films are commonly used in the pre/treatment stage to create a barrier for aggressive environmental species (J. H. Osborne, Prog. Org. Coat. 2001, 41, 280; M. Guglielmi, J. Sol-Gel Sci. Technol. 1997, 8, 443; R. L. Parkhill, E. T. Knobbe and M. S. Donley, Prog. Org. Coat. 2001, 41, 261; W.J. van Ooij, T.F. Child, CHEMTECH 1998, 28, 26). Such films were successfully deposited on metallic surfaces by formation of metallo-siloxane bonds, plasma polymerization or sol-gel technique in order to provide an additional barrier against the corrosion species and mainly to improve adhesion between the metal and polymer coating system. However, the inhibitors incorporated directly into the sol-gel matrix loose their activity very quickly. Moreover, the bulk distribution of inhibitors does not allow controlling of inhibitor release on demand.

To enhance the anticorrosion properties of the organic, inorganic and hybrid coating the method of layer-by-layer assembly (G. Decher, J. D. Hong, J. Schmitt, Thin Solid Film 1992, 210/211, 811; G. Decher, Science 1997, 277, 1232) of oppositely charged polyelectrolytes on planar surfaces was applied. The ion exchange capacity of the layer-by-layer film was used to incorporate inorganic corrosion inhibitors: molybdates, vanadates, trivalent chromium species, cerium, oxalates, transition metal ions, lanthanide ions, nitrite, cobalt etc (O. Kashurina, E. Knobbe, T. L. Metroke, J. W. Ostrander, N. A. Kotov, Int. J. Nanotechnology, 2004, 1, 347). However, the layer-by-layer method is time consumedly and a rather expensive process. Moreover, the covalent adsorption of inhibitors significantly restricts the quantity of the active anticorrosion compounds that could be incorporated into the polymer coating. A very promising approach was to use the layer-by-layer method for formation of layer-by-layer-assembled nanoreservoirs filled with inhibitors (EP 06 004 993; Shchukin, M. Zheludkevich, K. Yasakau, S. Lamaka, M. Ferreira, H. Mohwald, Adv. Mat. 2006, 18, 1672). These nanocontainers embedded in hybrid epoxy-functionalized ZrO2/SiO2 sol-gel coatings exhibited very high corrosion protection.

In spite of significant success in development of anticorrosion coatings, there is still a need for a further improved combination of inhibitors and coating matrix with respect to costs and anti-corrosive properties.

Thus, an object of the present invention is to provide new economical, very effective and broadly applicable means for long-term corrosion protection of metal surfaces with controlled release of inhibitors.

Said problem is solved according to the present invention by providing an anti-corrosive coating according to claim 1 comprising a sandwich-like complex of organic species and inhibitor on a metal substrate. Related aspects are the method for preparing said coating according to claim 12 and the method for providing controllable release of an corrosion inhibitor according to claim 19. Specific embodiments of the invention are subject of the dependent claims.

### Description of the Invention

According to the present invention, corrosion inhibitors are distributed in the bulk between two layers of organic species, preferably polymer or polyelectrolyte layers, forming a so-called sandwich-like structure or complex. This sandwich-like complex is sensitive to at least one stimulus and capable to release the corrosion inhibitor in response to said stimulus.

The anti-corrosive coating of the present invention comprising said multifunctional sandwich-like polymer/inhibitor complex will provide effective corrosion protection by eliminating interaction of aggressive agents with the metal surface and providing a long-term activity of the inhibitors. Additionally, the application of the present coatings has a number of advantages important for aerospace, aircraft, automobile industry and human being. The sandwich-like complexes are mostly cost effective and environmentally friendly. They can be easily loaded with corrosion inhibitors. The properties of such complexes can be tuned to a particular application by a variety of polymers and their modification. The inhibitor release can be controlled by external stimuli (e.g. pH, ionic strength, mechanical impacts, and temperature). Furthermore, the use of such anti-corrosive coatings for metal surfaces comprising the above sandwich-like polymer/inhibitor complex allows avoiding hazardous agents (chromate-containing conversion coating).

The layers of organic species in the sandwich-like complex of the present invention may comprise any suitable organic species which is sensitive to at least one stimulus and capable to release the inhibitor compound(s) in response to said stimulus. The organic species may be polymers, in particular charged polymers, preferably polyelectrolytes, conducting polymers, organic dyes, biopolymers and polyamino acids such as proteins etc., vesicles, organic colloids. More specifically, the organic species may be a polymer or polyelectrolyte selected from the group consisting of poly(alkylene imine), e.g. poly(ethylene imine), poly(styrene sulfonate), e.g. poly(sodium 4-styrenesulfonate), poly(allyl amine), e.g. poly(allyl amine hydrochloride), poly(diallyldimethylammoniumchloride), polyvinyl alcohol, polyamic acid, polypyrrole, polyaniline, poly(hydroxybutyric acid), polystyrene, poly(diallyldimethylammonium chloride), poly(meth)acrylic acid, polyalkylene glcol, e.g. polyethylene glycol, poly(vinylpyridine), polyvinylpyrrolidone), poly(ethylenoxide), poly(N-isopropylacrylamide) and biopolymers and polyamino acids, such gelatine, agarose, cellulose, alginic acid, dextran, casein, polyarginine, polyglycin, polyglutamic acid, polyaspartic acid. Other suitable polymers will be evident for the skilled artisan and may be obtained by, e.g., modifying the above identified polymers/polyelectrolytes or other polymers/polyelectrolytes as appropriate by introducing specific groups according to methods well known in the art. These groups may confer specific desirable properties to the polymer/polyelectrolyte, such as a defined hydrophilicity, hydrophobicity, charge, strength, sensibility for a specific stimulus etc. The polymer or polyelectrolyte may also comprise copolymers or blends of suitable polymers/polyelectrolytes, such as copolymers or blends of the above mentioned polymers or polyelectrolytes. In a specific embodiment of the present invention, one or both of inner and outer layer of the sandwich-like complex embedding the inhibitor layer comprises alternate layers of a positively charged polyelectrolyte, e.g. poly(ethylene imine), and of a negatively charged polyelectrolyte, e.g. poly(styrene sulfonate).

Preferably, the layers of organic species are nanolayers having an average thickness in the range from 200 to 1000 nm.

The corrosion inhibitor to be incorporated in the sandwich-like complex may be any corrosion inhibitor, preferably any organic corrosion inhibitor, known in the prior art which is suitable for the intended purpose. The choice of the inhibitor will depend, i.a., from the specific metallic products and structures to be protected, from the environmental conditions and operating conditions of the corrosion-protected products and other factors which will be evident for the skilled person in the art.

Specifically, the corrosion inhibitor may e.g. comprise an organic compound selected from the group consisting of organic compounds containing one or more amino groups, azole-derivatives, organic compounds containing one or more carboxyl groups or salts of carboxylic acids, and organic compounds containing one or more pyridinium or pyrazine groups.

In a more specific embodiment, the corrosion inhibitor is selected from the group consisting of salicylaldoxime, 8-hydroxyquinolin, quinaldic acid, mercaptobenzothiazole, benzotriazole and tolyltriazole.

The specific stimulus which causes the release of the inhibitor, may be one or more of several stimuli to which the polymer/polyelectrolyte used in the sandwich-like complex is known to be responsive. Typical stimuli are a change of pH, ionic strength, elctrochemical potential, humidity or water, temperature, light, or applied magnetic or electric fields or mechanical impact. A preferred stimulus is a change of pH.

The metall substrate for the corrosion inhibiting coating of the present invention may by any corrosion-sensitive metal or metal alloy. Typical, but non-limiting examples are iron and iron alloys, magnesium and magnesium alloys, aluminium and aluminium alloys. The coating of the present invention is especially advantageous for corrosion protection of aluminium and aluminium alloys.

Typically, the metal substrate has a planar or essentially planar surface. The surface may also be curved with respect to its macroscopic dimensions but simultaneously "microscopic planar". "Microscopic planar" in this context means a surface which does not show a significant curvature in the micrometer or nanometer range.

The sandwich-like complex is deposited either directly on the metal substrate or, preferably, through an anchoring layer providing a strong complex adhesion to the substrate. Therefore, the sandwich-like complex will comprise planar or microscopic planar layers and could be further characterized as a planar sandwich-like complex.

Before formation of the sandwich-like complex, the metal surface, e.g. aluminium, needs to be prepared for deposition. The typical corrosion-sensitive metal surface is covered by a natural oxide film. This thin layer, in the case of aluminium typically 3-7 nm, is not sufficient to protect against corrosion agents. Moreover, this natural oxide film does not give good adhesion to paint. Consequently, the metal surface, e.g. aluminium surface, is usually pre-treated before application of a coating (C. Spadaro, C. Dispenza and C. Sunseri, J. Phys.: Condens. Matter. 2006, 18, 2007; J. D. Venables, D. K. McNamara, J. M. Chen, T. S. Sun, R. L. Hopping, Appl. Surf. Sci. 1979, 3, 88). Intensive sonication in water with an ultrasonic horn is applied for surface 'pretreatments' of pure aluminium. As a result, a highly micro-rough surface providing the possibility for mechanical interlocking is formed.

One substantial benefit of ultrasound in pre-treatment processing is the partly removal of natural oxide layer from metal, in particular aluminium and aluminium alloy, surfaces.

This is mainly achieved through the large, but localised, forces produced by cavitation. Furthermore, cavitation is known to be able to change the chemical composition of some of the reagents and of the water itself (through the formation of peroxides). Therefore, the new active uniform oxide layer is rapidly formed on the metal (aluminium) surface.

The sandwich-like inhibitor complex is deposited either directly on the metal substrate or through an anchoring layer providing a strong complex adhesion to the substrate.

In a preferred embodiment of the present invention, the pretreated metal surface is further modified by depositing an adhesion-promoting anchoring layer on the metal substrate. For example, many pretreated metals, in particular aluminium and aluminium alloys, can be modified by silane coupling agents, which have both adhesion-promoting and corrosion inhibiting properties. Organofunctional silanes are hybrid organic-inorganic compounds that can be used as coupling agents across the organic/inorganic interface (C. J. Lund, P. D. Murphy, M. V. Plat, Silanes and other coupling agents. Ed., K. M. Mittal, VSP 1992, pp 423). Many organosilanes have a formula of type X₃Si(CH₂)ₙY, where X represents a hydrolysable group, such as methoxy or ethoxy (i.e. OR), and Y is an organofunctional group (e.g. Cl, NH₂, SH) chosen for compatibility with the organic coating that is subsequently added. Preferably the organosilane is selected from the group consisting of organosilanes with amino and/or epoxy groups. Specific, non-limiting examples of suitable organosilanes are Y-glycidoxypropyltrimethoxysilane or Y-aminopropyltriethoxysilane. The organosilane coating can be deposited by immersion of the ultrasound treated samples into an aqueous solution of the organosilane(s).

Positively charged polymers can be also used for the pretreatment of the aluminium surface instead of organosilanes. Suitable but non-limiting examples for such polymers are poly(alkylene imines), preferably poly(yethylene imine). Poly(ethylene imine) is considered to be a very effective supporting polymer. Its use as an anchoring layer leads to formation of smooth and uniform polymer films.

Subsequently, a sandwich-like inhibitor complex comprising
i) a first inner layer of organic species,
ii) a corrosion inhibitor layer, and
iii) a second outer layer of organic species, is deposited on the surface of the metal substrate which is preferably covered by an anchoring layer such as an organosilane or polymer, e.g. poly(ethylene imine), layer.

In a specific embodiment of the present invention, the first (inner) polymer layer may be formed by a negatively charged polyelectrolyte, e.g. poly(sodium 4-styrenesulfonate) or polyamic acid. Then an appropriate organic corrosion inhibitor, e.g. salicylaldoxime or 8-hydroxyquinolin, may be adsorbed on the polymer layer. Finally, a further (outer) polymer layer of negatively charged polyelectrolyte, which may be the same as the inner polymer layer or not, may be deposited on the inhibitor layer. If quinaldic acid and/or mercaptobenzothiazole are used as inhibitors, the adjacent polymer layers will be formed by positively charged polymers, e.g. poly(ethylene imine) (PEI), poly(allylamine hydrochloride). In this case, it is possible to use the PEI anchoring layer simultaneously as the inner polymer layer. At the end, the layer of inhibitor is covered by an outer positively or negatively charged polymer layer. As a result, a sandwich-like polymer (polyelectrolyte) / inhibitor complex is formed. In contrast to the layer-by-layer (LBL) method referred to in the introductory part of the specification, the inhibitor may be, and preferably is, distributed in bulk between the both polymer layers and is not required to form a real structured thin layer itself as it is the case in the LBL method.

Studies on the present invention revealed that the deposition of corrosion inhibitors as sandwich-like complexes with polymers, in particular charged polymers such as polyelectrolytes, offers a number of advantages. Such protective complexes are able to prevent any negative effects of the corrosion inhibitors on the stability of the coating; to prolong anticorrosion activity of inhibitors; to provide intelligent release of the inhibitors and control of the inhibitor activity due to the control of the complex stability and/or polymer permeability with stimuli associated with the corrosion process at the corrosion pit, e.g. pH, ionic strength, electrochemical potential, temperature, or applied magnetic or electric fields or mechanical impact.

### Brief description of the Figures

**Figure 1****.** Sketch of the LBL covered aluminium alloy (AA2024).
**Figure 2****.** SEM images of the aluminium alloy surface after ultrasound treatment (a); IRRA spectra of the AA2024 plates with different time of sonication (10, 20, 30 and 40 min) (b).
**Figure 3****.** IRRA spectra of the samples modified by: A - γ-GPS; B - γ-APS; C - PEI.
**Figure 4****.** IRRA spectra of the modified AA2024 plates: A - PEI/PSS; B - PEI/PSS/8-HQ; C - PEI/PSS/8-HQ/PSS.
**Figure 5****.** SEM images of the unmodified AA2024 after degreasing and polishing (standard procedure) (a) and covered by sandwich-like polymer / inhibitor complex; unmodified film after sonication (c) and covered by sandwich-like polymer /inhibitor complex (d).
**Figure 6****.** SEM images of AA2024 covered by a sandwich-like polymer / inhibitor complex. The anchoring layer - organosilane. The sample (a) is prepared with 2 polyelectrolyte layers. The sample (b) - with 3 polyelectrolyte layers.
**Figure 7****.** Long term corrosion test in 0.5M NaCl. One plate is with sandwich-like polymer / inhibitor complex and one plate is initial AA2024.
**Figure 8****.** SEM images of the samples immersed in 0.5M NaCl for 3 days: organosilane modified AA2024 (a), AA2024 with sandwich-like polymer / inhibitor complex (b).

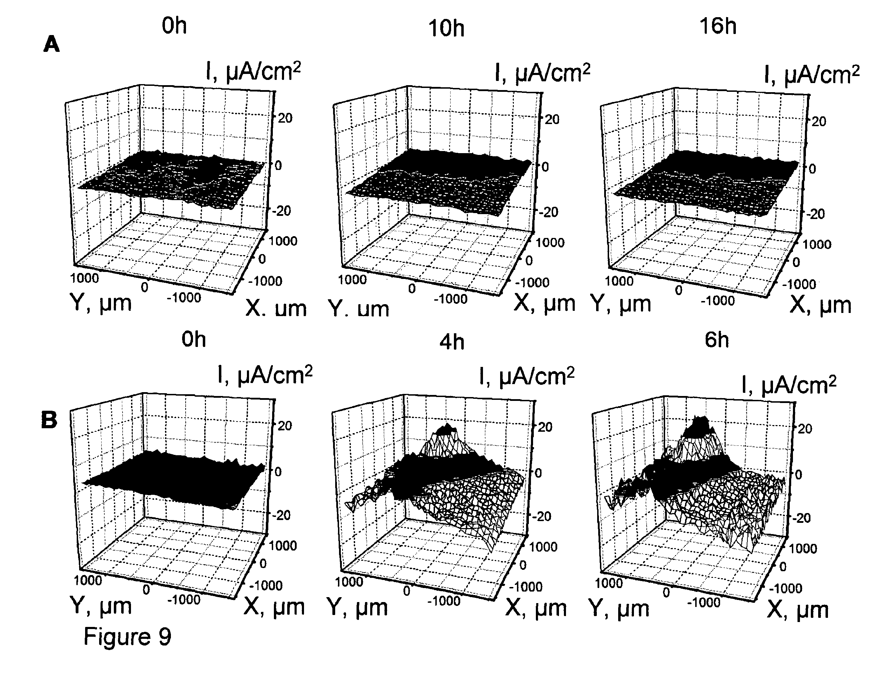

**Figure 9****.** Ionic current map over the surface of a sample substrate (Al) covered with the anti-corrosive coating of the present invention (**A**) and the same sample covered by a hybrid sol-gel with nanocontainers of the prior art (EP 06004993.9) containing the same inhibitor (**B**) obtained by the scanning vibration electrode technique (SVET) measurements. In the samples with nanocontainers, the corrosion process was detected after 4 h of immersion whereas the activity on the samples covered by the coating of the present invention was not observed even in 16 h of the experiment. These results indicate that the surface protection by the coating of the invention is stable even in aggressive solutions.

### EXAMPLE 1

### Preparation and properties of an anti-corrosive coating comprising a sandwich-like polymer/inhibitor complex deposited on an aluminium alloy substrate

In a specific embodiment of the present invention, an anticorrosive coating comprising a sandwich-like polymer /inhibitor complex as defined above was deposited on aluminium alloy AA2024 as a model metal substrate and the anticorrosive protection thereof was investigated.

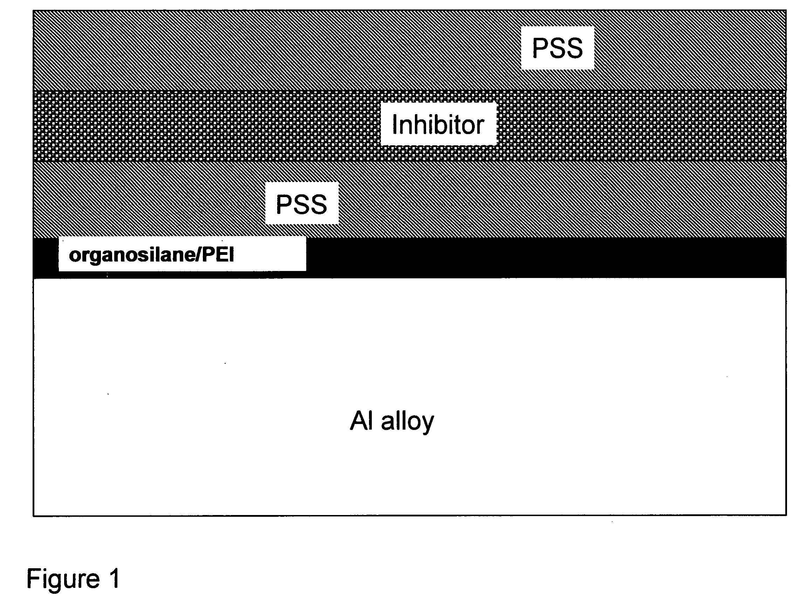

Nanolayers of poly(styrene sulfate) (PSS) and optionally of poly(ethyleneimine) (PEI) (for the anchoring layer as an alternative to organosilane) were employed to create a matrix on the substrate surface for incorporation of corrosion inhibitors. The sandwich-like complex can be deposited both directly on the aluminium surface or by using an organosilane or PEI support. To prepare the organosilane support the aluminium surface was treated by γ-glycidoxypropyltrimethoxysilane (γ-GPS) or γ-aminopropyltriethoxysilane (γ-APS). The rate of release can be controlled by pH changes during corrosion of aluminium alloy. The sketch of the resulting aluminium plate protected by sandwich-like deposited polymer (polyelectrolyte) / inhibitor film is shown in Figure 1. After surface degreasing and etching, the anchoring layer of organosilanes (γ-APS or γ-GPS) or of PEI was formed. Then PSS and inhibitor (8-hydroxyquinoline) was deposited by an assembly procedure as outlined in more detail below. In result, stable multilayers of polyelectrolytes and inhibitor were formed on an aluminium surface.

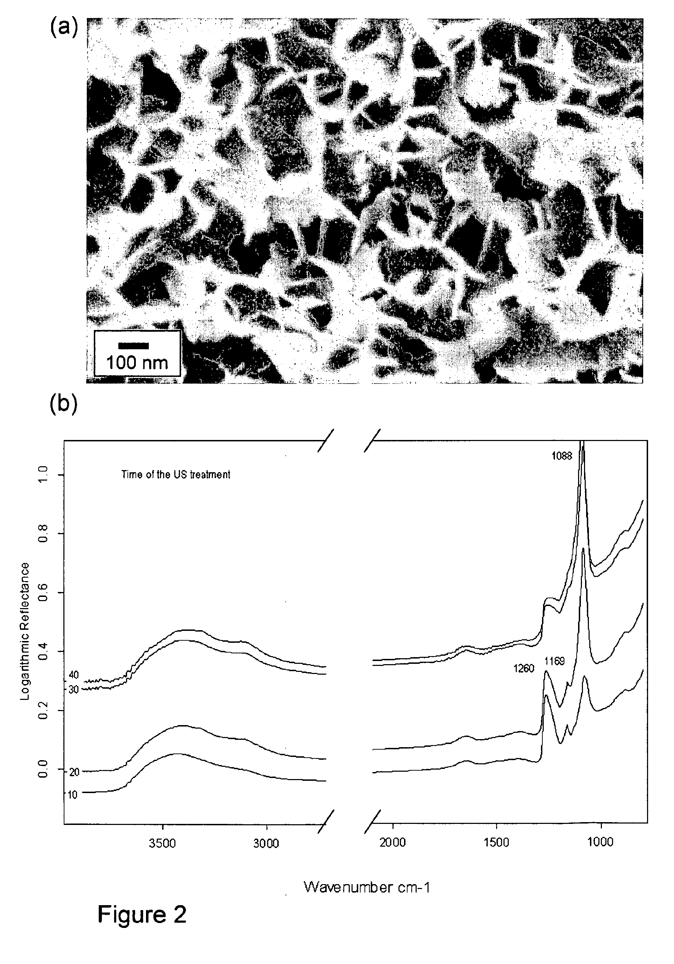

Before polymer and organosilane deposition the aluminium substrates were degreased in isopropanol flow and rinsed in purified water. Then the samples were treated by ultrasound (500 W) for 10 minutes. In result a highly micro-rough layer of aluminium oxide was formed. The freshly formed oxide layer is characterized by a cell structure (D. Hennemann, W. Brockmann, J. Adhesion 1981, 12, 297) (Figure 2a). The size of the cell was measured about 100 - 200 nm and the wall thickness - about 15 nm. The observed morphology is very similar to the morphology described for the aluminium surface prepared by using the Boeing Phosphoric Acid Anodize Process (PAA) (J. D. Venables, D. K. McNamara, J. M. Chen, T. S. Sun, R. L. Hopping, Appl. Surf. Sci. 1979, 3, 88). Venables et al. described a similar type of surface as a "fiber reinforced interface" important in determining bondability. Such a fully developed surface of aluminium oxide can be easily modified due to mechanical interlocking and good surface adhesion.

The IRRAS results also confirmed removal of natural aluminium oxide and formation of a new one. The spectrum (Figure 2b) showed the bands at 3400, 3100, 2999, 1260, 1169, 1088 and 840 cm-1 which was earlier (A. N. Rider, D. R. Arnott, Int. J. Adh. Adh. 2000, 20, 209) identified as pseudoboehmite (Al₂O₃ XH₂O, X≈2). The strong band at 1088 cm-1 increasing with the US (ultra sound) treatment time is attributed to vibrations of the A1- OH band (E. Wolska and W. Szajda, Zhurnal Prikladnoi Spektroskopii, 1983, 38, 160). The absorption in the 3400 - 3600 cm-1 region is characteristic for OH group oscillations. We could not assign the band at 1260 cm⁻¹ decreasing after the US treatment. This band could be probably attributed to some impurities in the A1 alloy which were removed during sonication.

The absence of the band at 960 cm⁻¹ assigned to Al-O-Al attributed to air-formed amorphous aluminium oxide showed that the ultrasound treatment led to the transformation of the mechanically weak natural oxide to pseudoboehmite. Due to its high porosity and surface area, pseudoboehmite provides high capacity and adsorption activity to aluminium alloys.

**Materials.** Aluminium alloy samples AA2024 were supplied by EADS Deutschland Gmbh. Polyethylenimin (PEI, MW∼600000-1000000 kD), poly(sodium 4-styrenesulfonate) (PSS, MW∼70000), 8-hydroxyquinoline, γ-glycidoxypropyltrimethoxysilane (GPS), γ-aminopropyltriethoxysilane (APS), sodium chloride, absolute ethanol were purchased from Sigma-Aldrich and used without further purification. The water was purified before use in a three stage Milipore Milli-Q Plus 185 purification system and had a resistivity higher than 18.2 MΩ2m·cm.

**IRRA spectroscopy.** Spectra were acquired with an IFS 66 FT-IR spectrometer from Bruker (Ettlingen, Germany) equipped with an external reflectance unit containing a Langmuir trough setup. The infrared beam is directed through the external port of the spectrometer and is subsequently reflected by three mirrors in a rigid mount before being focused on the sample surface. A KRS-5 wire grid polarizer is placed into the optical path directly before the beam hits the sample surface. The reflected light is collected at the same angle as the angle of incidence. The light then follows an equivalent mirror path and is directed onto a narrow band mercury-cadmium-telluride detector, which is cooled by liquid nitrogen. The entire experimental setup is enclosed to reduce relative humidity fluctuations. For all measurements at 40 mN/m, p-polarized radiation was used at an angle of incidence of 70°. A total of 128 scans were acquired with a scanner velocity of 20 kHz at a resolution of 8 cm-1.

The scans were co-added, apodized with the Blackman-Harris 3-term function, and fast Fourier-transformed with one level of zero-filling to produce spectral data encoded at 4 cm⁻¹ intervals. IRRA spectra are presented as absorbance vs. wavenumber. Absorbance, also reflectance-absorbance, is obtained from -lg (R/R0), where R is the single-beam reflectance of the sample and R0 the single-beam reflectance of the reference. The spectra were baseline corrected before peak positions and intensities were determined. Peak heights rather than integrated intensities were used to minimize interference from overlapping spectral features.

**Scanning Electron Microscopy (SEM).** SEM measurements were conducted with a Gemini Leo 1550 instrument at an operation voltage of 3 keV. A drop of the sample solution was placed onto a glass slide, dried in air and sputtered with gold.

**Atomic Force Microscopy (AFM).** AFM measurements were performed in air at room temperature using a Nanoscope III Multimode AFM (Digital Instruments Inc., USA) operating in tapping mode.

**Sonication.** Ultrasonic Processor CV 33 Sonics Inc. (Switzerland) operating at 20 kHz with maximal output power of 500 W was used for ultrasound pre-treatment of AA2024.

### EXAMPLE 2

### Organosilane pre-treatment of an aluminium alloy substrate

The organosilane nanofilms were formed on freshly prepared A1 alloy by immersion of the plates in 2% aqueous solutions of γ-APS or γ-GPS at their pH (10.4 for γ-APS and 7 for γ-GPS) for 2 h. After plate withdrawal the excess solution was removed by a nitrogen stream.

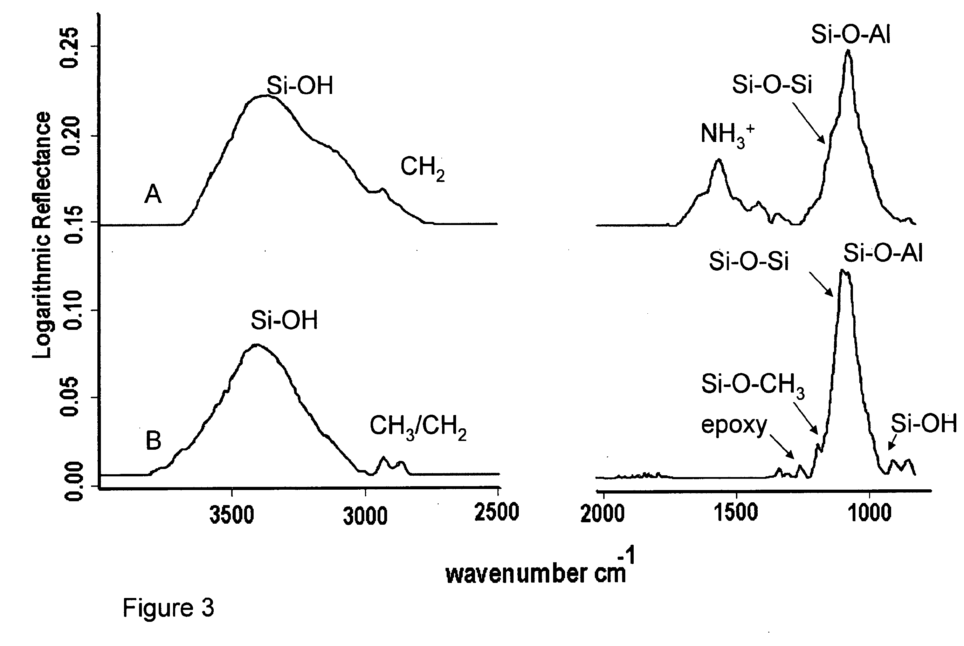

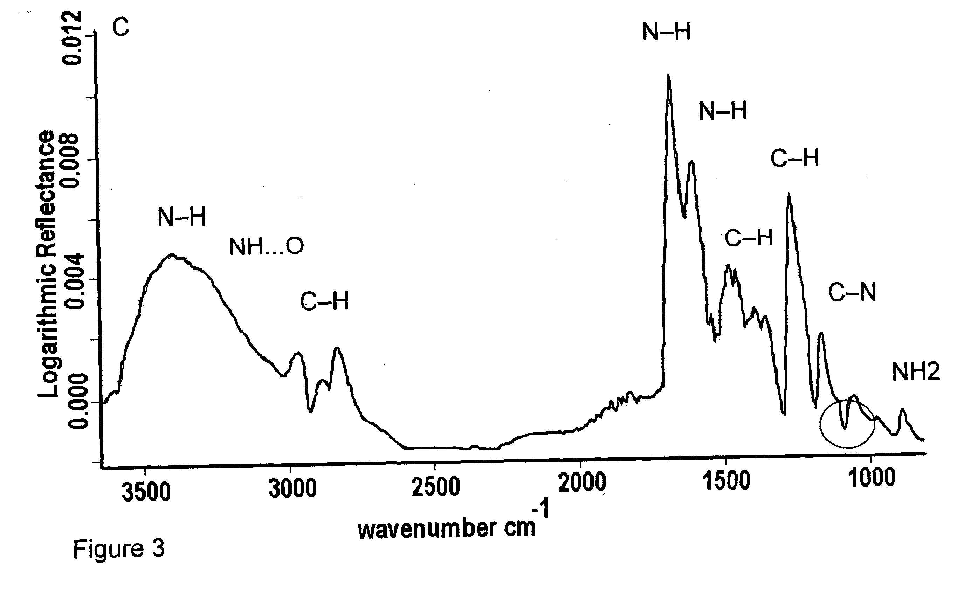

The IRRA spectra (Figure 3) of the organosilanes (γ-APS and γ-GPS) adsorbed on aluminium surfaces exhibit adsorption bands in the region between 900 and 1250 cm⁻¹ where the stretching modes of Si-O bonds are located. The strong band observed at 1080 cm⁻¹ can be assigned to both SiO asymmetric stretching mode and Al-O adsorption discussed above. The peak at 1080 cm-1 in the spectrum of organosilane modified aluminium is broader than in the spectrum of unmodified aluminium due to overlapping of SiO and AlO bands. The bands at 1146 cm-1 for γ-APS (Figure 3b) and 1160 cm-1 (Figure 3c) for γ-GPS indicate partial condensation of the silane (F. J. Boerio, C. A. Gosselin, R. G. Dillingham, and H. W. Liu, J. Adhesion, 1981, 13, 159). The spectrum of γ-GPS film has bands at 1200, 1080 and 820 cm⁻¹ which were attributed to the residual SiOCH₃ groups. The peaks at 915 cm⁻¹ and the intensive peak at 3300 cm⁻¹ showed the presence of residual silanol. The intensive peak at 1105 cm⁻¹ is attributed to the silanols which were polymerized on the surface. The presence of SiOCH₃ and silanol groups demonstrates that the interaction between γ-GPS and aluminium oxide is weaker than for γ-APS and aluminium. Additionally, the characteristic peaks for both γ-APS and γ-GPS can be also observed on the spectra. The band in the region 1600 - 1400 cm⁻¹ could be attributed to deformation vibrations of protonated amino groups of γ-APS. The bands at 1250 cm⁻¹ (epoxy ring) and the peaks at 2930 and 2870 are CH₃/CH₂ stretching mode (M.-L. Abel, J. F. Watts, R. P. Digby, J. Adhesion, 2004, 80, 291).

### EXAMPLE 3

### Polymer pre-treatment of an aluminium alloy substrate

A PEI film was prepared by the spray coating method from 2 mg/ml PEI solution in 50wt% ethanol at pH ≈ 10 using a commercial spray nozzle (Carl Roth GmbH). The samples were dried under ambient condition. The IRRA spectrum (Figure 3c) of PEI contains two bands at 2930 and 2820 cm⁻¹ resulting from the CH stretching vibrations of the methylene groups of the polymer. A broad peak with a maximum around 3300 cm⁻¹ and a 3250 cm⁻¹ shoulder can be attributed to the NH stretching band (H. C. Haas, N. W. Schuler, N. R. Macdonald, J. Polymer Sci. 1972, 10, 3143). It may be assumed that the shoulder at 3250 cm⁻¹ corresponds to the hydrogen bonding of the NH... O type in complexes between PEI film and aluminium oxide. In addition, a broad range of absorption bands was observed between 1600 and 1200 cm⁻¹ resulting from NH, CH and CN deformation modes (S. Lakard, G. Herlem, B. Lakard, B. Fahys, J. Mol. Structure 2004, 685, 83). The decrease in the frequencies of the valence vibrations of the N-H bond in the complex indicates an enhancement in its polarity, and, consequently, an increase in the acid properties of the proton. The Al-O adsorption peak at 1080 cm⁻¹ is negative (the red circle in the spectrum). Therefore, PEI forms a dense layer covering the surface of aluminium.

### EXAMPLE 4

### Formation of an sandwich-like polymer (polyelectrolyte) / inhibitor complex on an aluminium alloy substrate

The components were deposited by spray coating using a commercial spray nozzle (Carl Roth GmbH). The inner polymer layer was prepared by spraying 2 mg/ml PSS solution in 50wt% ethanol onto the organosilane or PEI covered surface. The samples were left to dry in open air for 1 h. The inhibitor was deposited from 10 mg/ml solution of 8HQ in absolute ethanol. The samples were dried as described above. The outer PSS layer was formed by a similar procedure as the previous PSS one.

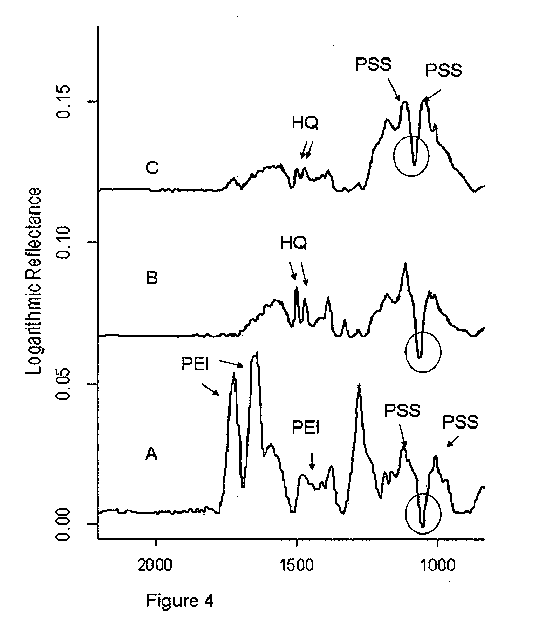

The layer deposition was confirmed by IRRAS. The characteristic bands from both PSS and HQ could be distinguished in the spectrum (Figure 4). The SO₃²⁻ group antisymmetric and symmetric vibrational adsorptions was assigned to the peaks at 1184 and 1042 cm⁻¹, respectively (Y. Tran, P. Auroy, J. Am. Chem. Soc. 2001, 123, 3644). Finally, a broad band between 3200 and 3600 cm⁻¹ and H₂O scissor vibration in 1700-1570 cm⁻¹ can also be observed due to the presence of water (J. C. Yang, M. J. Jablonsky, J. W. Mays, Polymer 2002, 43, 5125). Peaks at 1130 and 1011 cm⁻¹ can be assigned to the in-plane skeleton vibration of the benzene ring and in-plane bending vibration of the benzene ring. Furthermore, the residual bands from PEI (in the region 1600 and 1200 cm⁻¹ are also observed as well as the intensive negative peak from Al-OH groups.

The bands at 1606, 1506, 1498 and 1475 cm⁻¹ can be assigned to ring vibrations and the one at 1373 cm⁻¹ to C-H bending of the >CHO group in the 8HQ molecules (M. D. Halls, R. Arosa, Can. J. Chem. 1998, 76, 1730). In the solid state, the infrared absorption spectrum of 8HQ shows a broad band due to OH stretching vibrations in the range 3100 - 3200 cm⁻¹ which is characteristic of the hydrogen bonding between the OH groups and the nitrogen atoms (E. Bardez, 1. Devol, B. Larrey, B. Valeur, J. Phys. Chem. 1997, 101, 7786). Unfortunately, the band overlap of the film components doesn't allow the correct interpretation of this region.

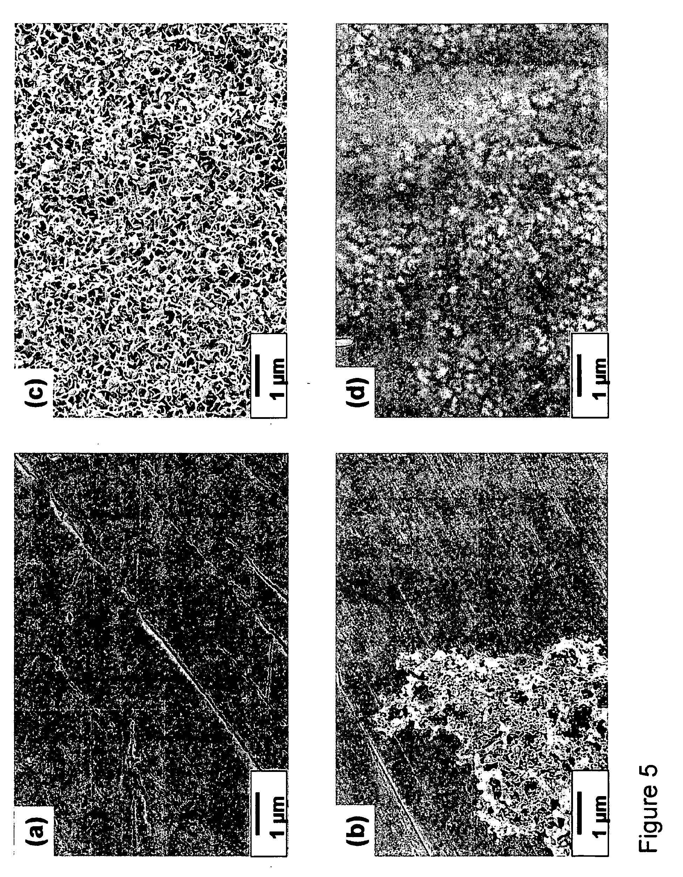

The SEM images (Figure 5) of the modified samples prepared with US pre-treatment of the surface and without pretreatment show that the US pre-treatment has a crucial role in formation of a uniform film. The fully developed surface of US pre-treated samples induces better wettability, adhesion and chemical bonding with the polymer layers. It results in homogeneous distribution of the polymer film on the aluminium surface. We also tried to deposit the sandwich-like film on the surface of AA2024 after the standard degreasing and polishing procedure. The surface of such samples is very smooth under any magnification (Figure 5a). The polymers after deposition did not form a continuous coating but are randomly bunched on the surface. The aggregates of complexes of PEI / PSS could be obviously distinguished on the SEM images (Figure 5b).

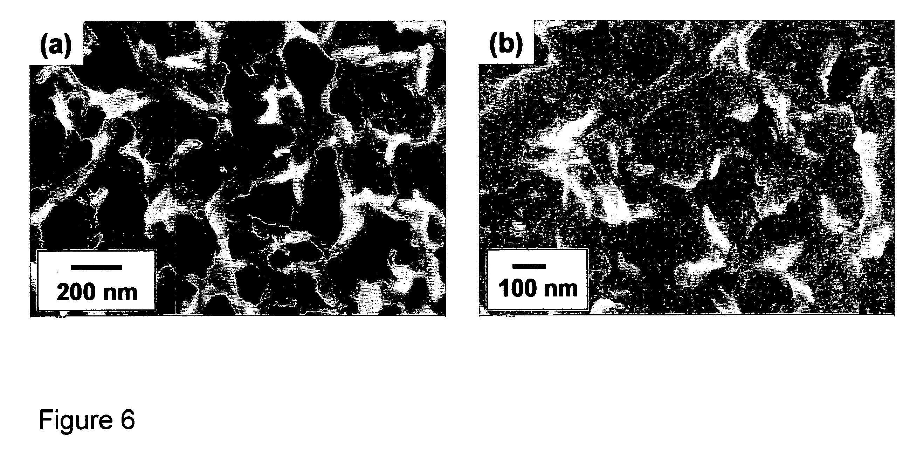

The surface morphology of the covered samples prepared with organosilanes (Figure 6) and PEI (Figure 5 c and d) was also investigated by SEM. If PEI was used as an anchoring layer, a dense film completely covering as evidenced by the deep cavities (Figure 6a) the surface was formed. If organosilanes were used for the surface pre-treatment, the final film was significantly thinner (Figure 6 a). The surface morphology of the initial plates could still be distinguished in the SEM images. It is not very clear if this organosilane film is continuous and fully covers the aluminium surface in this case. Figure 6b is the SEM image of the samples prepared with an additional PEI layer. Although the sandwich-like film is still very thin there is no doubt that the protective coating is continuous and fully covers the aluminium surface.

The nanofilm prepared with PEI is smooth and dense. In this case, the sandwich-like film can form very dense and thick coating completely changing the morphology of the initial material.

The thickness of each layer was estimated by AFM in tapping mode. A thickness of 150 ± 20 nm was measured for the γ-APS layer, 120 ± 20 nm for γ-GPS and 250 ± 40 nm for PEI. Unfortunately, we could not estimate the thickness of each layer in the sandwich-like complex film because of high roughness of the surface and small layer thickness (approximately < 10 nm).

### EXAMPLE 5

### Immersion Corrosion test

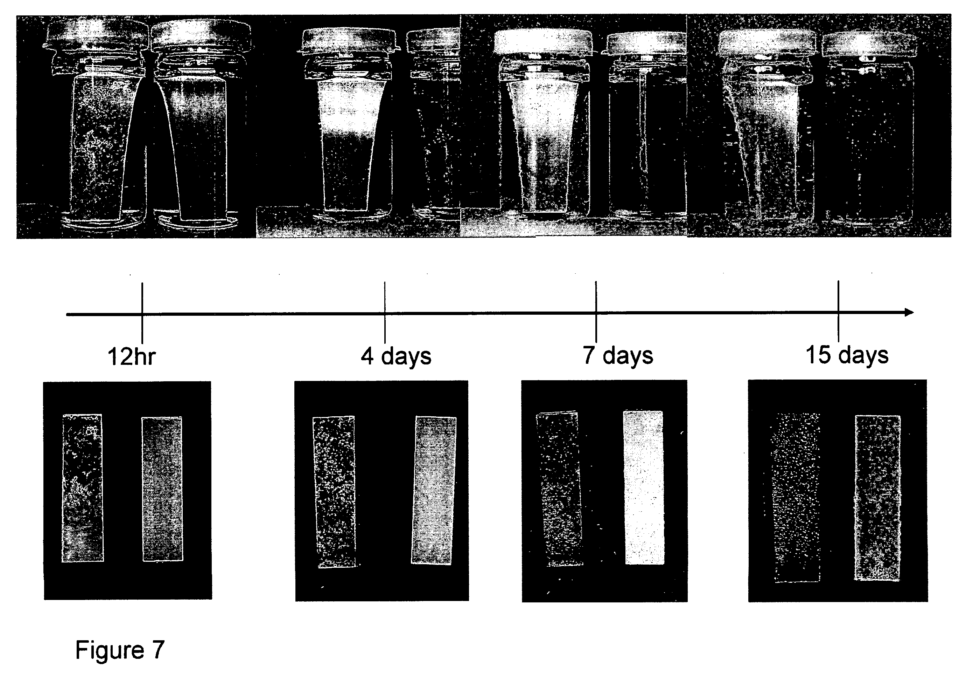

The samples of unmodified AA2024 alloy and covered by polymer complex with inhibitor were immersed into 0.5M aqueous NaCl solution (Figure 7). The first visual traces of corrosion of the unmodified aluminium were observed after 12 h of experiment. After 21 days the sandwich-like protective coating still exhibits very high resistance to corrosion process. After 28 days of immersion the protected aluminium starts being corroded due to partial degradation of the protective coating which was proved by IRRA spectra.

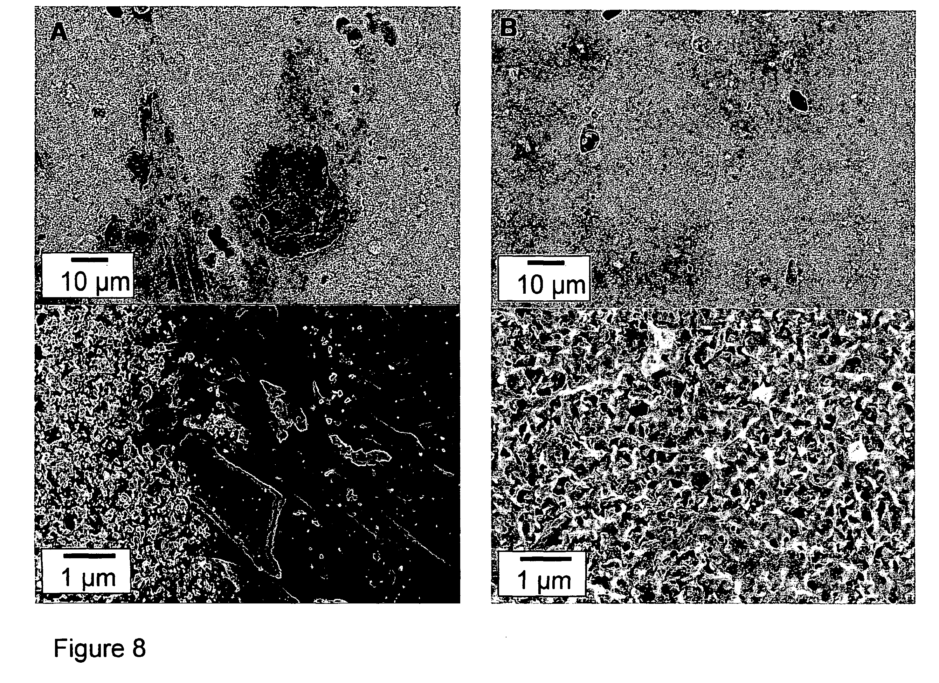

The immersion corrosion test was performed on the samples with sandwich-like coating and on the samples modified by organosilanes only. The silane modified aluminium exhibited the first traces of surface erosion in 3 days of experiment (Figure 8a). The samples with sandwich-like polymer/inhibitor complex showed very high stability in 0.5M NaCl solution. The surface of these plates was not corroded (Figure 8b) even after 3 days of experiment. Therefore, a sandwich-like polymer (polyelectrolyte) / inhibitor film can conceivably suppress the corrosion of AA2024 due to the barrier properties of the polymer film and inhibition activity of 8-HQ.

## Claims

1. A corrosion inhibiting coating for active corrosion protection of a metal substrate, comprising, deposited on said metal substrate,
a sandwich-like complex comprised of
i) a first inner layer of organic species,
ii) a corrosion inhibitor layer, and
iii) a second outer layer of organic species,
which coating is sensitive to at least one specific stimulus and capable to release said corrosion inhibitor in response to said stimulus.

2. The coating according to claim 1, wherein an anchoring layer is provided between the metal substrate and the sandwich-like complex.

3. The coating according to claim 1 or claim 2, wherein the layers of organic species are nanolayers having an average thickness in the range from 200 to 1000 nm.

4. The coating according to any one of claims 1-3, wherein said organic species are selected from the group consisting of polymers, in particular charged polymers such as polyelectrolytes, conducting polymers, dyes, proteins, vesicles and organic colloids.

5. The coating according to claim 4, wherein said polymers are selected from the group consisting of poly(alkylene imine), e.g. poly(ethylene imine), poly(allylamine), e.g. poly(allylamine hydrochloride), poly(styrene sulfonate), e.g. poly(sodium 4-styrenesulfonate), polyamic acid, polypyrrole, polyaniline, poly(acrylic acid), poly(methacrylic acid), poly(vinylpyrrolidone), poly (ethylene oxide), poly(N-isopropylacrylamide), poly(diallyldimethylammonium chloride).

6. The coating according to any one of claims 1-5, wherein the inhibitor comprises organic compounds selected from the group consisting of an organic compound containing one or more amino groups, azole-derivatives, organic compounds containing one or more carboxyl groups or salts of carboxylic acids, and organic compounds containing one or more pyridinium or pyrazine groups.

7. The coating according to claim 6, wherein the inhibitor is selected from the group consisting of salicylaldoxime, 8-hydroxyquinolin, quinaldic acid, mercaptobenzothiazole, benzotriazole and tolyltriazole.

8. The coating according to any one of claims 1-7, wherein the metal substrate is selected from the group consisting of iron and iron alloys, magnesium and magnesium alloys, aluminium and aluminium alloys.

9. The coating according to any one of claims 2-8, wherein the anchoring layer is a organosilane layer or a polymer layer.

10. The coating according to claim 9, wherein the polymer anchoring layer is a polyelectrolyte layer, e.g. a poly(ethylene imine) layer.

11. The coating according to any one of claims 1-10, wherein the stimulus is selected from the group consisting of: a pH change, temperature, ionic strength, electrochemical potential, magnetic or electric fields, mechanical impact.

12. A method for improving the corrosion resistance of metal surfaces comprising:
pre-treatment of the metal surface comprising sonicating the metal substrate, optionally depositing an anchoring layer on said pretreated metal substrate surface, and
deposition of a corrosion inhibitor-containing sandwich-like complex as defined in any one of claims 1 or 3-7 on said pretreated metal subtrate surface or on said anchoring layer.

13. The method according to claim 12, comprising sonicating the metal substrate in water with an ultrasonic horn.

14. The method according to claim 12 or claim 13, comprising the deposition of at least one organosilane or polymer on said metal substrate to form said anchoring layer.

15. The method according to claim 14, wherein the organosilane is selected from the group consisting of organosilanes with amino and/or epoxy groups.

16. The method according to claim 15, wherein the said organosilanes are γ-glycidoxypropyltrimethoxysilane or γ-aminopropyltriethoxysilane.

17. The method according to claim 14, wherein said polymer is poly(ethylene imine).

18. The method according to any one of claims 12-17, wherein the organic species are polymers or polyelectrolytes and are deposited by a deep and/or spray coating method.

19. A method for providing controllable release of a corrosion inhibitor from the coating according to any one of claims 1-11 comprising exposing said coating to a specific stimulus selected from the group consisting of: change of pH, electrochemical potential, ionic strength, temperature, electromagnetic irradiation, mechanical impact, rendering the coating capable to release said corrosion inhibitor.
